# EUROPÄISCHE PATENTSCHRIFT

(11) **EP 1 226 370 B1**
(45) Veröffentlichungstag und Bekanntmachung des Hinweises auf die Patenterteilung: **01.09.2004**
(21) Anmeldenummer: 00969050.4
(22) Anmeldetag: 12.10.2000
(51) Int. Cl.: F16F 15/26

(54) **VORRICHTUNG ZUM AUSGLEICH DER MASSENKRÄFTE IN HUBKOLBENMASCHINEN**
DEVICE FOR BALANCING OUT MASS FORCES IN INTERNAL COMBUSTION ENGINES
DISPOSITIF DE COMPENSATION DES FORCES D'INERTIE DANS DES MOTEURS A PISTON ALTERNATIF

(30) Priorität: 12.10.1999 AT 70499
(43) Veröffentlichungstag der Anmeldung: 31.07.2002
(73) Patentinhaber: Magna Steyr Powertrain AG & Co KG, 8502 Lannach (AT)
(72) Erfinder: STÜCKLER, Johann, A-8081 Heiligenkreuz am Waasen (AT)
(74) Vertreter: Kovac, Werner
(86) Internationale Anmeldenummer: PCT/AT2000/000263
(87) Internationale Veröffentlichungsnummer: WO 2001/027492

(56) Entgegenhaltungen:
- FR-A- 2 770 886
- JP-A- 5 288 241
- JP-A- 54 007 007
- US-A- 4 683 849
- US-A- 4 741 303

## Beschreibung

Die Erfindung betrifft eine Vorrichtung zum Ausgleich der Massenkräfte in Hubkolbenmaschinen, bestehend aus einem Ausgleichsgehäuse und einem Paar in diesem in Gleitlagern gelagerten Ausgleichswellen mit Ausgleichsgewichten, wobei das Ausgleichsgehäuse einteilig und direkt oder indirekt am Motorblock befestigt ist, und die Ausgleichswellen von der in ihren Grundlagern gelagerten Kurbelwelle aus angetrieben werden.

Ausgleichswellen haben den Zweck, die bei Hubkolbenmaschinen entstehenden Massenkräfte und -momente auszugleichen. Sie werden vorzugsweise in hochtourigen, leichten Verbrennungskraftmaschinen eingesetzt, insbesondere paarweise in Motoren mit vier Zylindern in Reihe zum Ausgleich der Massenkräfte zweiter Ordnung. Sie rotieren im letzteren Anwendungsfall mit der doppelten Kurbelwellendrehzahl, also mit bis über 10,000 Touren.

Das bedeutet extreme Anforderungen an Präzision und Lagerung sowie deren Schmierung. Zugleich sollen sie aber möglichst leicht, billig in der Herstellung und leicht zu montieren sein, und nebstbei im Kurbelgehäuse möglichst wenig Bauraum beanspruchen. Grundsätzlich sind zwei verschiedene Bauweisen möglich: Entweder ist die Ausgleichwelle mit ihren Ausgleichsgewichten einteilig ausgeführt oder sie ist "gebaut", die Ausgleichsgewichte werden auf der fertigen Welle befestigt.

Erstere ist etwa in der DE 37 05 346 A beschrieben, zweitere in der US 4,425,821. Die einteilige Bauweise ist sehr aufwendig, erfordert höchste Genauigkeit und führt bei Wellen mit mehr als zwei Lagern zu großen Lagerdurchmessem, die bei den hohen Drehzahlen schmiertechnisch nicht zu beherrschen sind. Aus eben diesen Gründen verbieten sich auch Wälzlager. Gebaute Ausgleichswellen haben demgegenüber vor allem den Vorteil, kleinere Lagerdurchmesser zu erlauben, wobei allerdings für ausreichende Steifigkeit der Welle zu sorgen ist. Ausserdem können auch bei mehr als zwei Lagern einteilige Gehäuse mit rundum geschlossenen Lagerbüchsen verwendet werden. Es ist jedoch schwierig, höchste Präzision, zuverlässige Befestigung und ausreichende Unwucht bei begrenzten Aussenmaßen zu erreichen. So ist etwa bei der Klemmverbindung der US 4,425,821 Präzision, minimaler Aussendurchmesser und Festigkeit der Verbindung zweifelhaft.

Es ist daher Ziel der Erfindung, eine gebaute Ausgleichswelle so zu gestalten, daß sie bei minimalen Herstellungskosten und einfacher Montage den Forderungen nach höchster Präzision der Lagerung bei ausreichender Schmierung, zuverlässiger Befestigung und minimalen Aussenabmessungen genügt.

Erfindungsgemäß wird das dadurch erreicht, daß
a) die Gleitlager der Ausgleichswellen mit den Grundlagern der Kurbelwelle in einer Ebene normal zur Kurbelwellenachse angeordnet sind,
b) die Gleitlager als Lagerflächen bearbeitete zylindrische Bohrungen im Ausgleichsgehäuse sind,
c) die Ausgleichswellen zylindrische Wellen im Wesentlichen konstanten Durchmessers sind, auf denen die Ausgleichsgewichte einzeln befestigt sind.
Wegen a) ist das Ausgleichsgehäuse einfach zu befestigen und können die Gleitlager auf kürzestem Weg und gleich gut mit Schmieröl in ausreichender Menge versorgt werden. Wegen b) können die Gleitlager bei geringsten Fertigungskosten und mit minimaler Schwächung des Ausgleichsgehäuses genauestens bearbeitet werden. Die minimale Schwächung des Gehäuses ist nötig, um die Präzision der Lagerung nicht durch Verzug des Gehäuses zu beeinträchtigen. Wellen konstanten Durchmessers nach c) sind besonders billig und genau herstellbar. Die einzeln befestigten Ausgleichsgewichte ermöglichen kleine Lagerdurchmesser und gestatten einfache Montage, sie werden beim Einführen der Welle in das Gehäuse einfach "aufgefädelt" und dann festgesetzt.

Wenn in Weiterbildung der Erfindung das Ausgleichsgehäuse aus Leichtmetall besteht und mit Schraubbolzen am Motorblock befestigt ist, sind die Schraubbolzen jeweils paarweise in einer Ebene normal zur Kurbelwellenachse durch die Grundlager angeordnet (Anspruch 2). Mit dieser Anordnung der Schraubbolzen ist die Befestigung des Ausgleichsgehäuses aus Leichtmetall mit seinem höheren Wärmeausdehnungskoeffizienten ineinem Motorblock aus Grauguß mit hinreichender Präzision möglich. Die Verschraubung nur in der Ebene der Grundlager bedeutet eine kleine Aufstandsfläche des Ausgleichsgehäuses am Motorblock. Zu beachten ist, daß dazu normale Schraubbolzen verwendet werden, keine Passbolzen. Erstere erlauben einen Ausgleich der Dehnungsdifferenzen durch geringfügiges Verschieben der Teile gegeneinander, die wegen der kleinen Aufstandsfläche möglich ist. So kommt es zu keiner die Präzision der Lagerung beeinträchtigenden Verwerfung des Leichtmetallgehäuses.

Zur Vereinfachung sowie zur Einsparung von Bauraum liegt es weiter im Rahmen der Erfindung, daß die Ausgleichsgewichte mindestens eine achsnormale Stirnfläche besitzen, die gemeinsam mit einer bearbeiteten Fläche des Ausgleichsgehäuses ein Spurlager bildet (Anspruch 3). In der Regel werden es beide Stirnflächen sein, sodaß die Ausgleichswelle ohne zusätzliche Bauteile mit hoher Präzision axial positioniert ist.

In einer bevorzugten Ausführungsform der Erfindung ist jedes der Gleitlager von dem nächstliegenden Grundlager der Kurbelwelle aus mit Schmieröl versorgt (Anspruch 4). So bekommt jedes Lager auf kürzestem Weg, daher mit geringem Druckverlust, eine ausreichende Ölmenge zugeteilt. Dadurch benötigen die Lager keine eigene Schmierölversorgung durch einen Längskanal, der zu ungleicher Verteilung des Schmieröles führen würde. Diese Art der Ölversorgung ist besonders vorteilhaft, wenn die Grundlager ihrerseits von aussen, also nicht durch eine längsgebohrte Kurbelwelle, versorgt werden.

In Weiterbildung dieser bevorzugten Ausführungsform besitzt das Ausgleichsgehäuse einen ersten und das Grundlager einen zweiten vertikalen Schmierkanal, welche miteinander fluchten und mittels einer Hülse miteinander verbunden sind (Anspruch 5). Die - natürlich auf die vertikale Symmetrieebene des Motors bezogen - vertikalen Schmierkanäle liegen in derselben Ebene wie die Schraubbolzen und werden bei der Montage ganz einfach durch Aufstecken auf die Hülse miteinander verbunden. Die Hülse kann ausserdem vertikale Versetzungen zwischen Ausgleichsgehäuse und Motorblock aufnehmen. Die Hülse kann ein ganz einfaches Rohrstück sein, weil besondere Dichtheit im Kurbelgehäuse nicht nötig ist.

Eine besonders vorteilhafte Anordnung besteht darin, daß der erste Schmierkanal zwischen den Gleitlagern der beiden Ausgleichwellen geführt und mittels Stichbohrungen mit den Gleitlagern verbunden ist (Anspruch 6). Sie bietet kürzeste Verbindungswege mit geringem Strömungswiderstand und einfache Bearbeitung.

Weiters liegt es im Rahmen der Erfindung , dass das Ausgleichsgewicht ein zylindricher Ring mit zwei achsnormalen Stirnflächen und mit einem Ausschnitt im längsmittigen Bereich ist, sodaß das Ausgleichsgewicht aus zwei an die beiden Stirnflächen anschließenden Ringteilen und einem dazwischenliegenden Segmentteil besteht, und daß das Ausgleichsgewicht mit der Welle fest verbunden ist (Anspruch 7). Die randseitigen geschlossenen Ringe nehmen die Zugkraft auf, bieten eine passgenaue feste Verbindung und versteifen auch die Welle, sie können im einfachsten Fall aufgeschrumpft sein. Der Ausschnitt im längsmittigen Bereich - er erstreckt sich praktisch über den halben Umfang - erlaubt eine große Massenexzentrizität bei geringem Aussendurchmesser. Der Segmentteil umgibt die andere Hälfte des Umfanges. Er liegt an der Zugzone der auf Biegung beanspruchten Welle an und erhöht so deren Steifigkeit erheblich. Diese Verformungsbehinderung durch Erhöhung des Widerstandsmomentes kommt der Welle durch verminderte Biegespannungen und den Lagern durch besseres Tragprofil wegen der geringeren Durchbiegung zugute. Somit sind die Wellen mit kleinerem Durchmesser ausführbar. Insgesamt sind so bei präziser Lagerung kleinere Aussenabmessungen erreichbar.

Wenn die so erreichbare Massenexzentrizität nicht ausreicht, kann bei nur geringer Vergrößerung des Aussendurchmessers das Ausgleichsgewicht auf der dem Ausschnitt abgewandten Seite eine die exzentrische Masse vergrößernde Verdickung aufweisen (Anspruch 8).

In einer vorteilhaften Ausführungsvariante ist das Ausgleichsgewicht mit der Ausgleichswelle durch eine Energiestrahlschweißnaht im Ausschnitt verbunden, die beiderseits an der Verschneidung der Ausschnittebene mit der Ausgleichswelle hergestellt ist (Anspruch 9). So wird eine besonders schnelle und zuverlässige Verbindung hergestellt, die bei gegenüberliegenden vorzugsweise mit einem Laser hergestellten Schweißnähten auch vollkommen verzugsfrei ist.

In einer anderen vorteilhaften Ausführungsvariante weist die Ausgleichswelle mindestens eine erste Querbohrung auf, die mit mindestens einer zweiten Querbohrung des Ausgleichsgewichtes fluchtet, welche beide Bohrungen ein im Wesentlichen zylindrisches Verbindungselement aufnehmen (Anspruch 10).

Im Folgenden wird die Erfindung anhand von Abbildungen beschrieben und erläutert. Es stellen dar:
- Fig. 1:: Ein Anordnungsschema einer erfindungsgemäßen Einheit,
- Fig. 2:: Eine axonometrische Ansicht eines Ausgleichsgehäuses als Teil der erfindungsgemäßen Einheit in Draufsicht,
- Fig. 3:: Einen Längsschnitt durch eine erfindungsgemäßen Einheit in einer ersten und zweiten Ausführungsform,
- Fig. 4:: Einen Querschnitt nach III-III und IV-IV in Fig. 3,
- Fig. 5:: Einen Längsschnitt durch eine erfindungsgemäßen Einheit in einer dritten und vierten Ausführungsform,
- Fig. 6:: Einen Querschnitt nach V-V und VI-VI in Fig. 5,
- Fig. 7:: Einen Längsschnitt durch eine erfindungsgemäßen Einheit in einer fünften und sechsten Ausführungsform,
- Fig. 8:: Einen Querschnitt nach VII-VII und VIII-VIII in Fig. 7,
- Fig. 9:: Eine axonometrische Ansicht eines erfindungsgemäßen Aus gleichsgewichtes, und
- Fig.10:: Einen Querschnitt nach X-X in Fig.2, vergrößert.

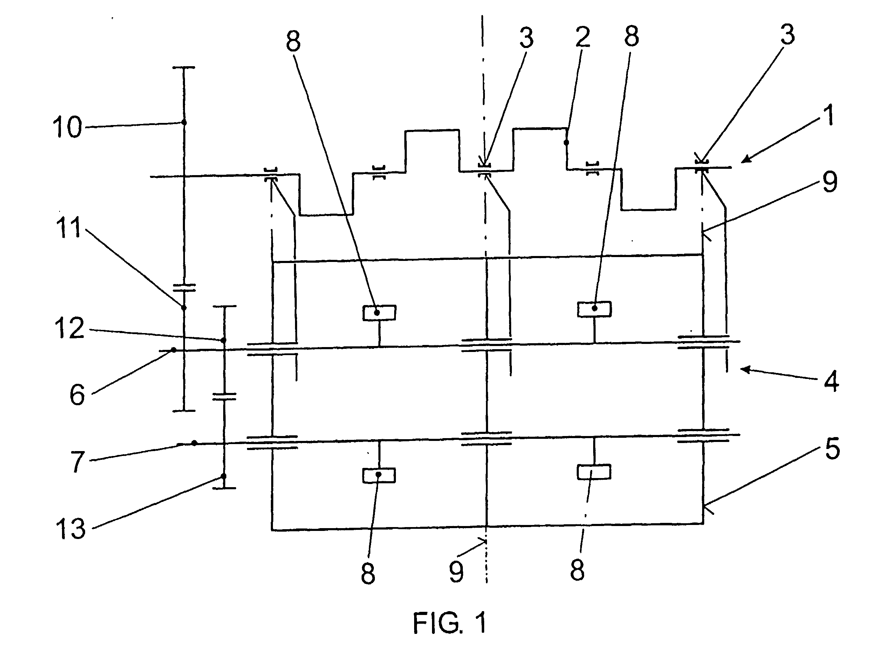

In Fig. 1 ist die Hubkolbenmaschine 1 nur durch ihre Kurbelwelle 2 und deren Grundlager 3 versinnbildlicht. Die Grundlager 3 stehen stellvertretend für den gesamten Motorblock, der sowohl in Tunnelbauweise als auch mit freien Lagerbrücken ausgeführt sein kann. Die unter der Kurbelwelle 2 am Motorblock befestigte Massenausgleichsvorrichtung ist allgemein mit 4 bezeichnet. Sie besteht aus einem Ausgleichsgehäuse 5 und zwei darin gegenläufig rotierenden Ausgleichswellen 6, 7 mit Ausgleichsgewichten 8. Strichliert sind die Normalebenen 9 durch die Grundlager 3 angedeutet, in ihr liegen auch die noch zu beschreibenden Lager der Massenausgleichsvorrichtung 4. Die Ausgleichswellen 6, 7 werden von einem mit der Kurbelwelle 2 drehfest verbundenen Zahnrad 10 über ein Antriebszahnrad 11 angetrieben, die Synchronräder 12, 13 sorgen für gegenläufig gleiche Drehzahl.

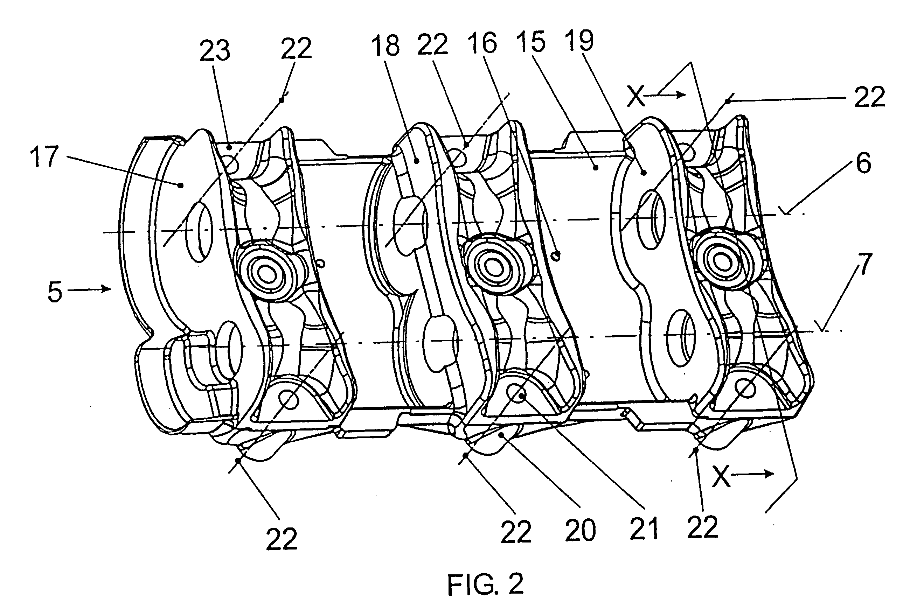

Fig. 2 zeigt das Ausgleichsgehäuse 5, das im dargestellten Ausführungsbeispiel ein Gußteil aus Leichtmetall ist. Es besteht aus einer Bodenschale 15 mit Ölabflußlöchem 16 und einer Anzahl von Lagerbrücken 17, 18, 19. Jede Lagerbrücke weist auf ihren beiden Seiten einen Anguß 20 mit einer vertikalen Bohrung 21 für je einen nur angedeuteten Schraubbolzen 22 auf, mit dem das Ausgleichsgehäuse 5 am Motorblock angeschraubt wird. Dazu sind in der Umgebung der Bohrungen 21 Aufstandsflächen 23 gebildet. Über diese Aufstandsflächen ist das montierte Ausgleichsgehäuse mit den entsprechenden Stellen im Motorblock verbunden, welche sich in einer gemeinsamen Normalebene 9 mit den Lagerbrücken 17, 18, 19 befindet. Die Verbindung erfolgt, nicht eigens dargestellt, entweder mit den den Lagerstuhl des Grundlagers bildeten Querrippen des Motorblockes oder mit den Lagerbrücken des Grundlagers oder, im Falle einer Tunnelkonstruktion, an diesem.

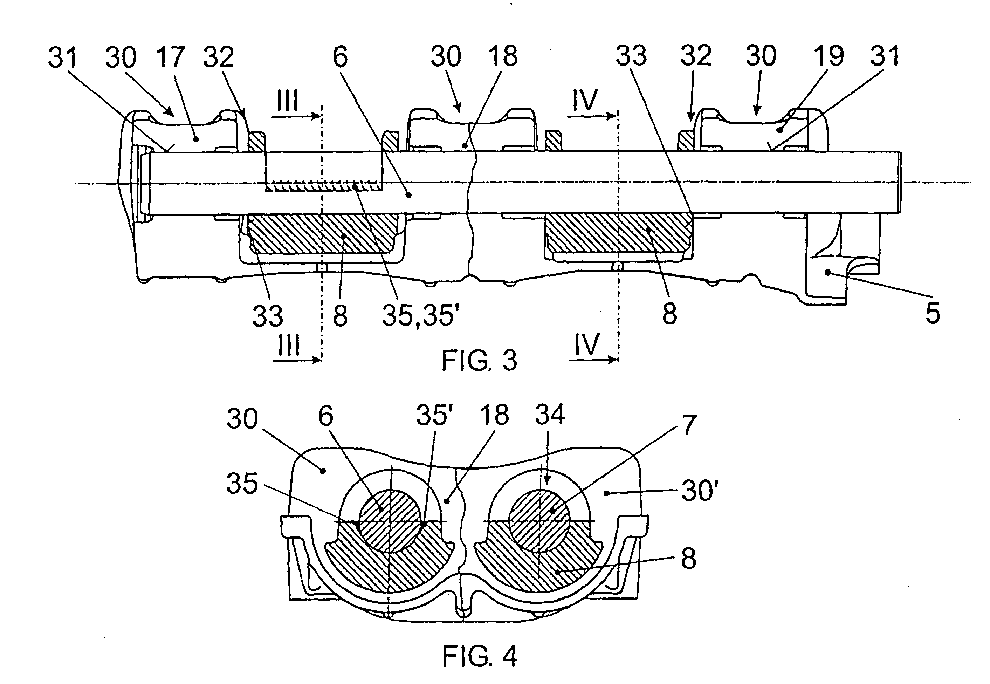

Fig. 3 ist ein vertikaler Längsschnitt durch die erste Ausgleichswelle 6, die wegen der Besonderheiten der beschriebenen Bauweise eine einfache, rein zylindrische Welle konstanten Durchmessers sein kann. Die drei Lagerbrücken 17, 18, 19 bilden Gleitlager 30 für die Lagerung der Ausgleichswelle 6. Sie weisen die Besonderheit auf, dass in dem Grundmaterial des Ausgleichsgehäuses 5 bzw der Lagerbrücken, Lagerflächen 31 für die radiale Lagerung bearbeitet sind, ohne dass eine eigene Lagerbüchse erforderlich wäre. An den beiden äußeren Lagerbrücken 17, 19 sind Spurlager 32 ausgebildet, wozu ebenfalls am Grundmaterial fein bearbeitete Lagerflächen 33 vorgesehen sind.

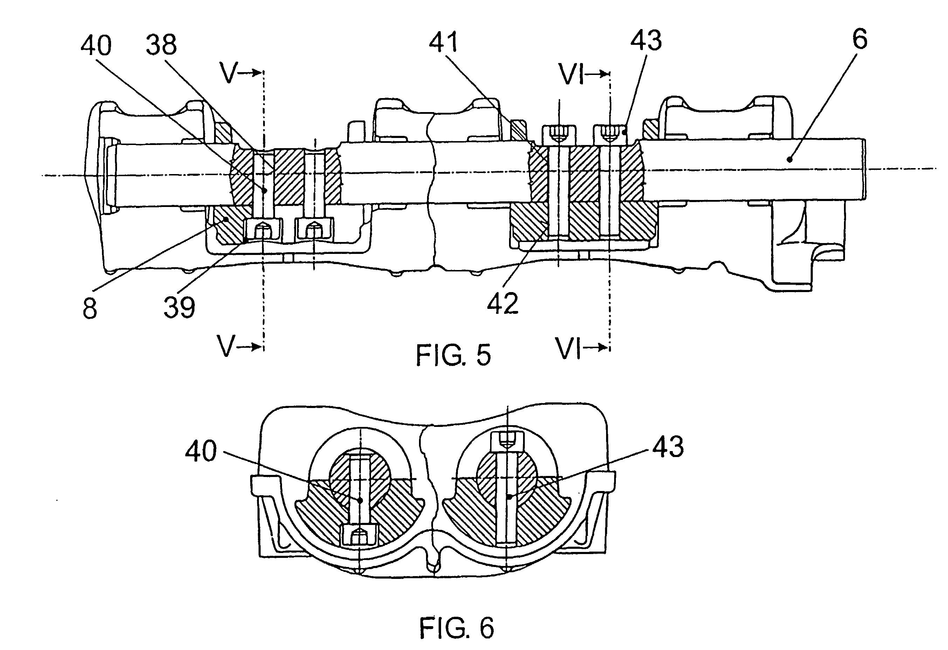

Auf den Ausgleichswellen 6, 7 können die Ausgleichsgewichte 8 in verschiedener Weise befestigt sein. Dazu sind in den Längschnitten der Figuren 3, 5 ,7 jeweils zwei verschiedene Befestigungsarten dargestellt und entsprechend in den Figuren 4, 6 und 8 die beiden Ausgleichswellen 6, 7 jeweils der einen und der anderen Ausführungsform zugeordnet. Es versteht sich aber von selbst, dass man normalerweise für beide Ausgleichswellen und sämtliche Ausgleichsgewichte dieselbe Art der Befestigung wählen wird.

In Fig.3, auf der rechten Seite ist das Ausgleichsgewicht 8 einfach auf die Ausgleichswelle 6 aufgeschrumpft (34), auf der linken Seite ist sie mittels zweier diametral gegenüber angeordneter und längsgerichteter Laserschweissnähte verbunden. Bei dieser Anordnung der Schweissnähte und bei Verwendung eines engfokussierten Hochenergiestrahles bleibt die Ausgleichswelle 6 verzugsfrei.

Fig. 5 und Fig. 6 zeigen zwei weitere Arten der Verbindung zwischen Ausgleichswelle 6 und Ausgleichsgewicht 8. Auf der linken Seite ist in der Ausgleichswelle 6 eine Gewindebohrung 38 und im Ausgleichsgewicht 8 eine Passbohrung mit Einsenkung 39 vorgesehen, durch die eine oder zwei Passschrauben 40 von der Seite des Ausgleichsgewichtes aus eingeschraubt sind. Auf der rechten Seite ist es umgekehrt: durch eine Bohrung 41 in der Ausgleichswelle 6 und eine Gewindebohrung 42 im Ausgleichsgewicht 8, werden Passschrauben 43 eingeschraubt.

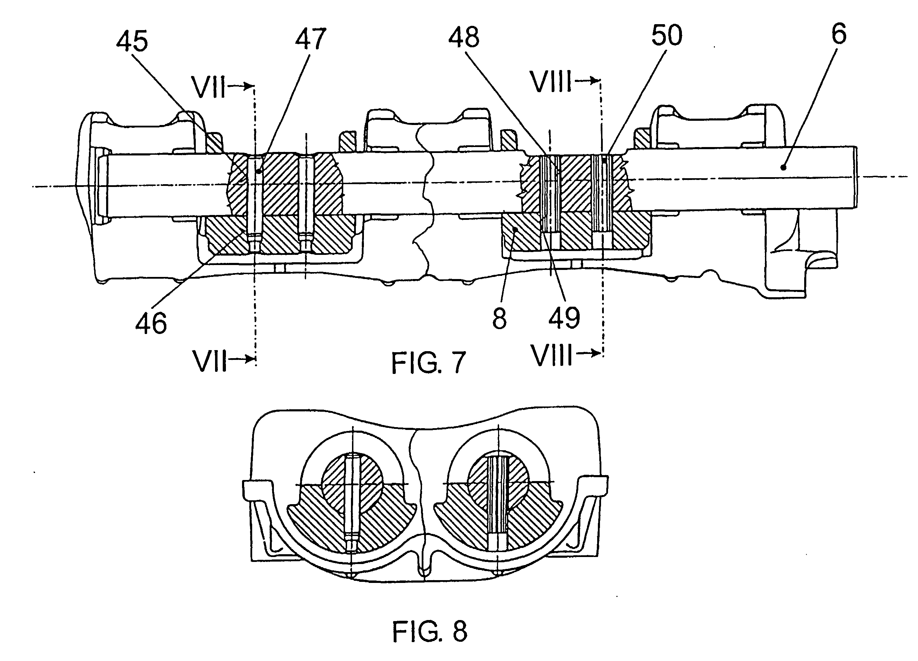

In Fig.7 und 8 erfolgt die Verbindung über eine Passbohrung 45 in der Ausgleichswelle 6 und eine vorzugsweise abgestufte Passbohrung 46 im Ausgleichsgewicht 8, in die bei der Montage mindestens ein Passstift 47 (hier sind es zwei) eingetrieben wird. Auf der rechten Seite sind zwei Passbohrungen 48, 49 gleichen Durchmessers vorgesehen, in die bei der Montage zwei Spannbuchsen 50 gesteckt werden.

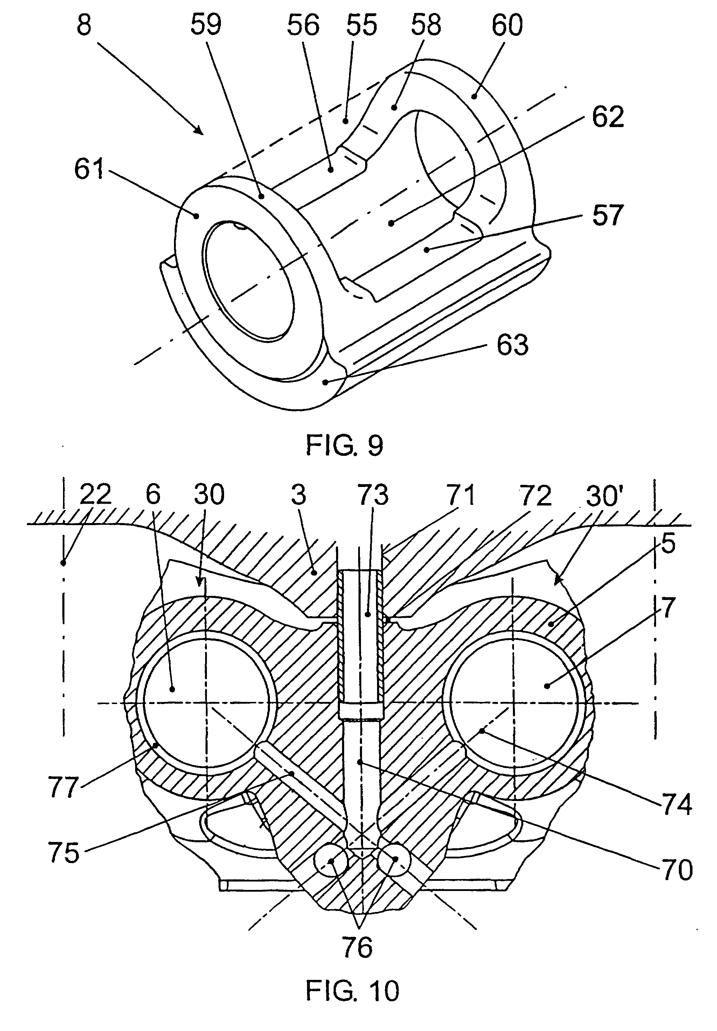

Fig. 9 zeigt das Ausgleichsgewicht 8 im Detail. Seine Grundform ist die eines zylindrischen Ringes bzw eines hohlen Zylinders mit dicker Wand, was strichliert angedeut ist. Er kann auf verschiedene Weise gefertigt sein, etwa geschmiedet oder aus Feinguß. Dessen ungeachtet wird bei der Erläuterung der Form von einem laternenartigen Ausschnitt 55 gesprochen, der über einen Teil der Länge und ungefähr um den halben Umfang erfolgt. Der Ausschnitt 55 wird von zwei Ausschnittebenen 56, 57 und von seitlichen Ausschnittflächen 58 begrenzt. Die Ausschnittebenen 56, 57 sind dann wesentlich, wenn die Verbindung mit der Welle mittels Laserschweissung erfolgt, dann kommt die Schweissnaht an der Schnittlinie der Ausschnittebenen 56, 57 mit dem Zylinder der Ausgleichswelle 6 zu liegen. In Längsrichtung beiderseits an den Ausschnitt 55 anschließend bleiben zwei Ringteile 59, 60 über, die geschlossene Ringe sind und die Fliehkräfte und im Falle einer Schrumpfverbindung auch die die Schrumpfspannung erzeugenenden Umfangskräfte aufnehmen. Die Ringteile 59, 60 haben jeweils an der Außenseite eine Stirnfläche 61 welche im Zusammenwirken mit der Lagerfläche 33 der Lagerbrücke 17 ein Spurlager 32 bildet. Der Ausschnitt 55 erstreckt sich ungefähr über einen Halbkreis, am restlichen Halbkreis befindet sich ein Segmentteil 62, der die exzentrische Masse bildet. Dadurch, dass sich zwischen den Ringteilen 59, 60 an der Seite des Ausschnittes 55 überhaupt kein Material befindet, ist mit nur geringer Dicke des Segmentteiles 62 eine hohe Exzentrizität zu erreichen. Wenn das nicht genügt, kann zusätzlich noch eine Verdickung 63 ausgebildet sein.

Fig. 10 zeigt hauptsächlich die Ölversorgung. Das Grundlager 3 und damit der gesamte Motorblock sind nur angedeutet. Das Grundlager selbst befindet sich über der Abbildung und ist nicht mehr zu sehen. Das Ausgleichsgehäuse 5 ist auch nur teilweise dargestellt und die Schraubenbolzen 22, mit denen es am Motorblock bzw Grundlager 3 angeschraubt ist, sind nur durch eine strichpunktierte Linie angedeutet. Der Schnitt ist in der Lagerbrücke 19 (Fig.2) geführt. Im Ausgleichsgehäuse 5 befindet sich ein erster vertikaler Schmierkanal 70, er ist parallel zu den Schraubenbohrungen 21 (Fig.2) und kann in einer Aufspannung mit diesen gebohrt werden. Im Grundlager 3 bzw Motorblock ist ein zweiter vertikaler Schmierkanal 71 vorgesehen, der mit dem ersten fluchtet, aber in einem kleinen Abstand 72 endet. Dadurch sind etwa wärmedehnungsbedingte Verschiebungen so aufgefangen, dass sie zu keiner Verspannung des Ausgleichsgehäuses 5 führen können. Verbunden sind die beiden Schmierkanäle 70, 71 durch eine eingesteckte Hülse 73. Der erste vertikale Schmierkanal 70 kann als Sackloch ausgeführt sein, führt aber unter die Ebene in der die beiden Ausgleichswellen 6, 7 sind. Die Verbindung zu den Lagern 30 wird durch wieder aufwärtsführende Stichbohrungen 74, 75 hergestellt. Sie schneiden den Schmierkanal 70 und können von unten in das Ausgleichsgehäuse 5 gebohrt werden. Sie sind nach außen durch eingepreßte Kugeln 76 verschlossen und münden in einer Ölverteilnuß 77 des Gleitlagers 30.

Auf diese Weise wird jedes Gleitlager der Ausgleichswellen 6, 7 vom zugeordneten Grundlager der Kurbelwelle aus in großer Menge und mit gleich hohem Druck mit Schmieröl versorgt. Dadurch ist deren praktisch spielfreier und präziser Lauf bei minimalen Reibungsverlusten gewährleistet.

## Patentansprüche

1. Vorrichtung zum Ausgleich der Massenkräfte in Hubkolbenmaschinen, bestehend aus einem Ausgleichsgehäuse und einem Paar in diesem in Gleitlagern gelagerten Ausgleichswellen (6,7) mit Ausgleichsgewichten (8), wobei das Ausgleichsgehäuse (5) einteilig und direkt oder indirekt am Motorblock befestigt ist, und die Ausgleichswellen von der in ihren Grundlagern (3) gelagerten Kurbelwelle aus angetrieben werden, **dadurch gekennzeichnet, daß**
a) die Gleitlager (30) der Ausgleichswellen (6,7) mit den Grundlagem (3) der Kurbelwelle (2) in einer Ebene (9) normal zur Kurbelwellenachse angeordnet sind,
b) die Gleitlager (30) als Lagerflächen (31) bearbeitete zylindrische Bohrungen im Ausgleichsgehäuse (5) sind,
c) die Ausgleichswellen (6,7) zylindrische Wellen im Wesentlichen konstanten Durchmessers sind, auf denen die Ausgleichsgewichte (8) einzeln befestigt sind.

2. Vorrichtung zum Ausgleich der Massenkräfte nach Anspruch 1, **dadurch gekennzeichnet, daß** das Ausgleichsgehäuse (5) aus Leichtmetall besteht und mittels Schraubbolzen (22) am Motorblock (3) befstigt ist, wobei die Schraubbolzen jeweils paarweise in einer Ebene (9) normal zur Kurbelwellenachse durch die Grundlager (3) angeordnet sind.

3. Vorrichtung zum Ausgleich der Massenkräfte nach Anspruch 1, **dadurch gekennzeichnet, daß** die Ausgleichsgewichte (8) mindestens eine achsnormale Stirnfläche (61) besitzen, die gemeinsam mit einer bearbeiteten Fläche (33) des Ausgleichsgehäuses (5) ein Spurlager (32) bildet.

4. Vorrichtung zum Ausgleich der Massenkräfte nach Anspruch 1, **dadurch gekennzeichnet, daß** jedes der Gleitlager (30,32) von dem nächstliegendem Grundlager (3) der Kurbelwelle aus mit Schmieröl versorgt ist.

5. Vorrichtung zum Ausgleich der Massenkräfte nach Anspruch 4, **dadurch gekennzeichnet, daß** das Ausgleichsgehäuse (5) einen ersten (70) und das Grundlager (3) einen zweiten (71) vertikalen Schmierkanal (70,71) besitzen, welche miteinander fluchten und mittels einer Hülse (73) miteinander verbunden sind.

6. Vorrichtung zum Ausgleich der Massenkräfte nach Anspruch 5, **dadurch gekennzeichnet, daß** der erste Schmierkanal (70) zwischen den Gleitlagern (30,30') der beiden Ausgleichwellen (6,7) geführt und mittels Stichbohrungen (74,75) mit den Gleitlagern (30,30') verbunden ist.

7. Vorrichtung zum Ausgleich der Massenkräfte nach Anspruch 3, **dadurch gekennzeichnet, dass** das Ausgleichsgewicht (8) im Wesentlichen ein zylindrischer Ring mit zwei achsnormalen Stirnflächen (61) und mit einem Ausschnitt (55) im längsmittigen Bereich ist, sodaß das Ausgleichsgewicht aus zwei an die beiden Stirnflächen anschließenden Ringteilen (59,60) und einem dazwischenliegenden Segmentteil (62) besteht.

8. Vorrichtung zum Ausgleich der Massenkräfte nach Anspruch 7, **dadurch gekennzeichnet, daß** das Ausgleichsgewicht (8) auf der dem Ausschnitt (55) abgewandten Seite eine die exzentrische Masse vergrößernde Verdickung (63) aufweist.

9. Vorrichtung zum Ausgleich der Massenkräfte nach Anspruch 7, **dadurch gekennzeichnet, daß** das Ausgleichsgewicht (8) mit der Welle (6,7) durch eine Energiestrahlschweißnaht (35,35') im Ausschnitt (55) verbunden ist, die beiderseits an der Verschneidung der Ausschnittebene (56,57) mit der Welle (6,7) hergestellt ist.

10. Vorrichtung zum Ausgleich der Massenkräfte nach Anspruch 7, **dadurch gekennzeichnet, daß** die Welle mindestens eine erste Querbohrung (38;41;45; 48) aufweist, die mit mindestens einer zweiten Querbohrung (39;42;46;49) des Ausgleichsgewichtes fluchtet, welche beide Bohrungen ein im Wesentlichen zylindrisches Verbindungselement (40;43;47;50) aufnehmen.

## Claims

1. A device for compensating the inertia forces in reciprocating-piston machines, consisting of a balance housing and of a pair of balance shafts (6, 7) mounted in the latter in sliding bearings and having compensating weights (8), the balance housing (5) being fastened in one part and directly or indirectly to the engine block, and the balance shafts being driven from the crankshaft mounted in its main bearings (3), **characterized in that**
a) the sliding bearings (30) of the balance shafts (6, 7) are arranged, together with the main bearings (3) of the crankshaft (2), in a plane (9) perpendicular to the crankshaft axis,
b) the sliding bearings (30) are cylindrical bores in the balance housing (5) which are machined as bearing surfaces (31),
c) the balance shafts (6, 7) are cylindrical shafts of essentially constant diameter, on which the compensating weights (8) are fastened individually.

2. The device for compensating inertia forces as claimed in claim 1, **characterized in that** the balance housing (5) consists of light metal and is fastened to the engine block (3) by means of screw bolts (22), the screw bolts being arranged in each case in pairs in a plane (9) perpendicular to the crankshaft axis through the main bearings (3).

3. The device for compensating inertia forces as claimed in claim 1, **characterized in that** the compensating weights (8) possess at least one axially perpendicular end face (61) which, together with a machined surface (33) of the balance housing (5), forms a step bearing (32).

4. The device for compensating inertia forces as claimed in claim 1, **characterized in that** each of the sliding bearings (30, 32) is supplied with lubricating oil from the nearest main bearing (3) of the crankshaft.

5. The device for compensating inertia forces as claimed in claim 4, **characterized in that** the balance housing (5) possesses a first (70) and the main bearing (3) a second (71) vertical lubricating duct (70, 71) which are in alignment with one another and are connected to one another by means of a sleeve (73).

6. The device for compensating inertia forces as claimed in claim 5, **characterized in that** the first lubricating duct (70) is guided between the sliding bearings (30, 30') of the two balance shafts (6, 7) and is connected to the sliding bearings (30, 30') by means of tap bores (74, 75).

7. The device for compensating inertia forces as claimed in claim 3, **characterized in that** the compensating weight (8) is essentially a cylindrical ring with two axially perpendicular end faces (61) and with a cutout (55) in the longitudinally central region, so that the compensating weight consists of two ring parts (59, 60) adjoining the two end faces and of a segment part (62) lying between them.

8. The device for compensating inertia forces as claimed in claim 7, **characterized in that** the compensating weight (8) has, on the side facing away from the cutout (55), a thickening (63) which increases the eccentric mass.

9. The device for compensating inertia forces as claimed in claim 7, **characterized in that** the compensating weight (8) is connected to the balance shaft (6, 7) in the cutout (55) by means of an energy-beam weld seam (35, 35') which is made on both sides at the intersection of the cutout plane (56, 57) with the shaft (6, 7).

10. The device for compensating inertia forces as claimed in claim 7, **characterized in that** the balance shaft has at least one first transverse bore (38; 41; 45; 48) which is in alignment with at least one second transverse bore (39; 42; 46; 49) of the compensating weight, said two bores receiving an essentially cylindrical connecting element (40; 43; 47; 50).

## Revendications

1. Dispositif d'équilibrage des forces inertielles dans des machines à piston alternatif, constitué d'un boîtier d'équilibrage et d'une paire d'arbres d'équilibrage (6, 7) montés dans ledit boîtier d'équilibrage dans des paliers coulissants et comportant des poids d'équilibrage (8), le boîtier d'équilibrage (5) étant fixé d'une seule pièce et directement ou indirectement au bloc moteur, et les arbres d'équilibrage étant entraînés à partir de l'arbre à manivelle monté dans ses paliers principaux (3), **caractérisé en ce que** :
a) les paliers coulissants (30) des arbres d'équilibrage (6, 7) avec les paliers principaux (3) de l'arbre à manivelle (2) sont disposés dans un plan (9) perpendiculaire à l'axe de l'arbre à manivelle,
b) les paliers coulissants (30) sont des perçages cylindriques usinés comme surfaces de palier (31) dans le boîtier d'équilibrage (5),
c) les arbres d'équilibrage (6, 7) sont des arbres cylindriques de diamètre sensiblement constant, sur lesquels les poids d'équilibrage (8) sont fixés individuellement.

2. Dispositif d'équilibrage des forces inertielles selon la revendication 1, **caractérisé en ce que** le boîtier d'équilibrage (5) est en métal léger, et est fixé au bloc moteur (3) au moyen de boulons filetés (22), les boulons filetés étant disposés par paires dans un plan (9) perpendiculaire à l'axe de l'arbre à manivelle et passant par les paliers principaux (3).

3. Dispositif d'équilibrage des forces inertielles selon la revendication 1, **caractérisé en ce que** les poids d'équilibrage (8) possèdent au moins une face frontale (61), perpendiculaire à l'axe, qui forme, conjointement avec une surface usinée (33) du boîtier d'équilibrage (5), un palier de butée (32).

4. Dispositif d'équilibrage des forces inertielles selon la revendication 1, **caractérisé en ce que** chacun des paliers coulissants (30, 32) est alimenté en huile de lubrification à partir du plus proche palier principal (3) de l'arbre à manivelle.

5. Dispositif d'équilibrage des forces inertielles selon la revendication 1, **caractérisé en ce que** le boîtier d'équilibrage (5) possède un premier canal de lubrification vertical (70), et le palier principal (3) possède un deuxième canal de lubrification vertical (71), lesquels canaux de lubrification verticaux (70, 71) sont alignés l'un avec l'autre et sont reliés entre eux par un manchon (73).

6. Dispositif d'équilibrage des forces inertielles selon la revendication 5, **caractérisé en ce que** le premier canal de lubrification (70) est guidé entre les paliers coulissants (30, 30') des deux arbres d'équilibrage (6, 7), et est relié au moyen de perçages traversants (74, 75) aux paliers coulissants (30, 30').

7. Dispositif d'équilibrage des forces inertielles selon la revendication 3, **caractérisé en ce que** le poids d'équilibrage (8) est essentiellement constitué par une bague cylindrique présentant deux faces frontales (61) perpendiculaires à l'axe, et une découpe (55) dans la région médiane longitudinale, de sorte que le poids d'équilibrage est constitué de deux parties de bague (59, 60) se raccordant aux deux faces frontales et d'une partie de segment (62) agencée entre ces deux parties de bague.

8. Dispositif d'équilibrage des forces inertielles selon la revendication 7, **caractérisé en ce que** le poids d'équilibrage (8) comporte, du côté opposé à la découpe (55), une surépaisseur (63) augmentant la masse excentrique.

9. Dispositif d'équilibrage des forces inertielles selon la revendication 7, **caractérisé en ce que** le poids d'équilibrage (8) est relié à l'arbre (6, 7) par un cordon de soudure (35, 35') réalisé dans la portion (55) par faisceau énergétique, lequel cordon de soudure est réalisé des deux côtés au niveau du plan de la découpe (56, 57) avec l'arbre (6, 7).

10. Dispositif d'équilibrage des forces inertielles selon la revendication 7, **caractérisé en ce que** l'arbre comporte au moins un premier perçage transversal (38 ; 41 ; 45 ; 48) qui est aligné avec au moins un deuxième perçage transversal (39 ; 42 ; 46 ; 49) du poids d'équilibrage, lesquels deux perçages reçoivent un élément de liaison (40 ; 43 ; 47 ; 50) essentiellement cylindrique.
